# EUROPEAN PATENT APPLICATION

(11) **EP 2 363 662 A2**
(43) Date of publication of application: **07.09.2011**
(21) Application number: 11157099.0
(22) Date of filing: 04.03.2011
(51) Int. Cl.: F24J 2/52, F24J 2/54

(54) **Support for solar panels**

(30) Priority: 04.03.2010 IT BO20100131
(71) Applicant: COFRAENERGY S.r.l. con Unico Socio, 48018 Faenza (IT)
(72) Inventor: De Giovanni, Davide, 48018 Faenza (IT)
(74) Representative: Jorio, Paolo

(57) **Abstract**

A support (1) for solar panels (2), comprising at least one supporting element (3) provided with: a pole (5) arranged vertically and partially set in the ground, a rod (9) for supporting the solar panel (2), inclined with respect to the pole (5) and hinged to the pole (5); and a system (10) for regulating the inclination of the solar panel (2) comprising an arm (29), which is connected at a first end by means of a fixed mechanical connection to the supporting rod (9) and at a second end by means of a mobile mechanical connection to the pole (5) in order to enable a variation of the inclination of the supporting rod (9) with respect to the pole (5) itself; the regulating system (10) comprises a joint assembly (11), which is set between the supporting rod (9) and the pole (5) and is able to turn about a vertical axis (A) to set the supporting rod (9) in rotation about the first axis (A).

## Description

### TECHNICAL SECTOR

The present invention relates to a support for photovoltaic and solar thermal panels (generically referred to hereinafter as "solar panels").

### PRIOR ART

In greater detail, the present invention regards a support for solar panels, in particular for outdoor installations, such as, for example, plots of land, fields, etc. The present invention can, however, find advantageous application also for installations on buildings for residential or industrial use, without this implying any loss of generality in the ensuing treatment.

Supports for solar panels generally comprise at least one supporting element (preferably three supporting elements), which in turn comprises: an omega pole arranged vertically and partially set in the ground; a rod for supporting the solar panel, which is inclined with respect to the omega pole and has a top portion hinged to the omega pole; and a system for regulating the inclination of the solar panel. The regulation system comprises a connection arm, which is connected at a first end by means of a fixed mechanical connection to a bottom portion of the supporting rod and at a second end to the omega pole.

By way of example, the patent application No. EP-A2-2109152 regards a support for solar panels, comprising a number of supporting elements, each of which is in turn provided with: a pole arranged vertically and partially set in the ground; a rod for supporting the solar panel, inclined with respect to the pole and connected to the pole by means of a first articulation member; and a connection arm, which is connected by means of a respective second articulation member to the rod and by means of a respective third articulation member to the pole. By intervening on the articulation members, the rod can slide with respect to the pole and with respect to the connection arm for varying positioning of the rod itself and, consequently, of the solar panel.

The patent No. US4995377 regards a solar collector comprising an elongated support, partially set in the ground and with longitudinal development, and a structure for supporting the solar thermal panel. The structure for supporting the solar thermal panel is hinged to the elongated support, and the solar collector comprises motor-driven actuation means in order to enable movement of the structure for supporting the solar thermal panel.

The patent application No. DE-A1-102005012054 regards an element designed to enable fixing of solar modules on the roofs of buildings. The element comprises a support, which has, in front view, a semi-annular shape, and a base element connected to a surface of the roof. The element then comprises a slide, which is designed to support the solar module proper and is mobile along the support to describe the path of an arc of circumference and vary the position of the solar module.

The utility model No. DE-U1-202006014047 regards, instead, a device for positioning solar panels comprising a support and a bar, which is set inclined with respect to the support and is provided with grooves made on respective side walls of the bar itself. The device further comprises a pair of plates, which project from the support and each have an internal surface provided with grooves, which are designed to couple with the grooves of the inclined bar.

The utility model No. DE-8520407 describes a support for solar panels comprising a pole, which is set vertically, partially set in the ground, and a top end of which is connected to the pole, and a plurality of connection arms, which are connected by means of a mobile mechanical connection at a first end to the pole and at a second end to a frame for supporting the solar panels so as to vary the inclination of the solar panel.

The utility model No. DE-9106505 regards a support for solar panels comprising a pole arranged vertically and partially set in the ground and a frame for supporting the solar panel. The frame for supporting the solar panel is divided into three portions hinged one another, of which a first top portion is fixedly connected to one end of the pole and is designed to support the solar panel, whilst the remaining portions are provided for supporting the mirrors. The inclination of the portions that support the mirrors and the amplitude of the angle formed by the various portions is varied as a function of the position of the Sun.

The patent application No. WO-A2-2009013607 regards, instead, a photovoltaic generator, which comprises at least one solar panel hinged to a vertical pole, which is in turn hinged to a base element for regulating the inclination of the solar panel.

The utility model No. DE-U-202008001010 regards a supporting structure for solar panels, comprising a plurality of elements, which in turn comprise: a pole arranged vertically and partially set in the ground; a rod for supporting the solar panel inclined with respect to the pole and hinged to the pole itself; and a mobile arm for connecting a bottom portion of the supporting rod and an intermediate portion of the pole. The solar panel is provided with a plurality of slides, which slide on a rail defined by the inclined supporting rod in order to vary its own position.

The utility model No. 1DE-U1-202008015017 regards, instead, a supporting structure for solar panels, comprising a plurality of elements, each of which in turn comprises: a pole arranged vertically and partially set in the ground; a rod for supporting the solar panel inclined with respect to the pole and connected to the pole itself; and an arm for connecting a bottom portion of the supporting rod and an intermediate portion of the pole. Each element further comprises means for coupling the solar panel to the profile of the supporting rod.

The patent application No. JP-A-60122867 regards a support for solar panels, which comprises a pole arranged vertically and partially set in the ground and a frame for supporting the solar panel inclined with respect to the pole and hinged to a top end of the pole itself. The supporting frame is divided into two portions hinged to one another, of which a top portion of smaller dimensions is coated with a coating of reflecting material, whereas a bottom portion of larger dimensions is hinged to the pole and is designed to support the solar panel. The support also comprises a mobile connection arm, which is pre-arranged for connecting a bottom end of the supporting frame to the pole and for varying the inclination of the supporting frame itself.

All the solutions described so far present, however, disadvantages. The supports for solar panels are, in fact, particularly complex and costly to produce and, when in use, the operations to be performed for varying the inclination of the supports can require some minutes and/or can prove particularly complex and inconvenient in the case where it is a single user who has to perform them.

### DESCRIPTION OF THE INVENTION

The aim of the present invention is consequently to provide a support for solar panels, said support being free from the drawbacks of the state of the art, easy and inexpensive to produce, and at the same time easily manoeuvrable by a single user.

According to the present invention, a support for solar panels is provided as claimed by the annexed claims.

### BRIEF DESCRIPTION OF THE DRAWINGS

The present invention will now be described with reference to the annexed drawings, which illustrate some non-limiting examples of embodiment thereof and in which:
- Figures 1 and 2 are perspective views in side elevation of a support for solar panels provided in accordance with the present invention;
- Figure 3 illustrates a detail of a supporting element of the support of Figure 1;
- Figure 4 illustrates an enlarged detail of the supporting element of Figure 3;

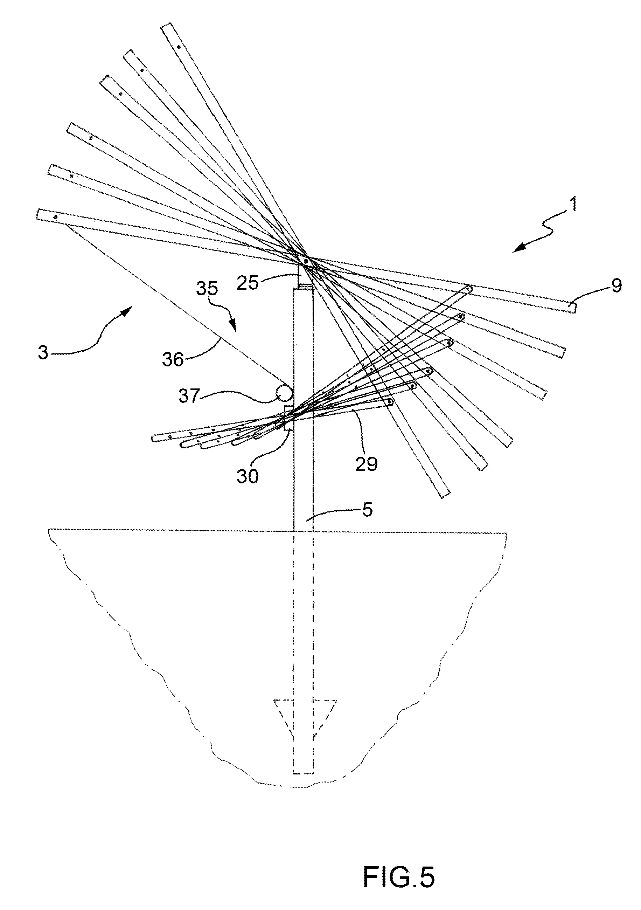

- Figure 5 is a side view in different configurations of the supporting element of Figure 3;
- Figure 6 is a plan view of a first detail of a joint of the supporting element of Figure 3; and
- Figures 7a to 7c are, respectively, a side view and a plan view of a second detail of the joint of the supporting element of Figure 3.

### PREFERRED EMBODIMENTS OF THE INVENTION

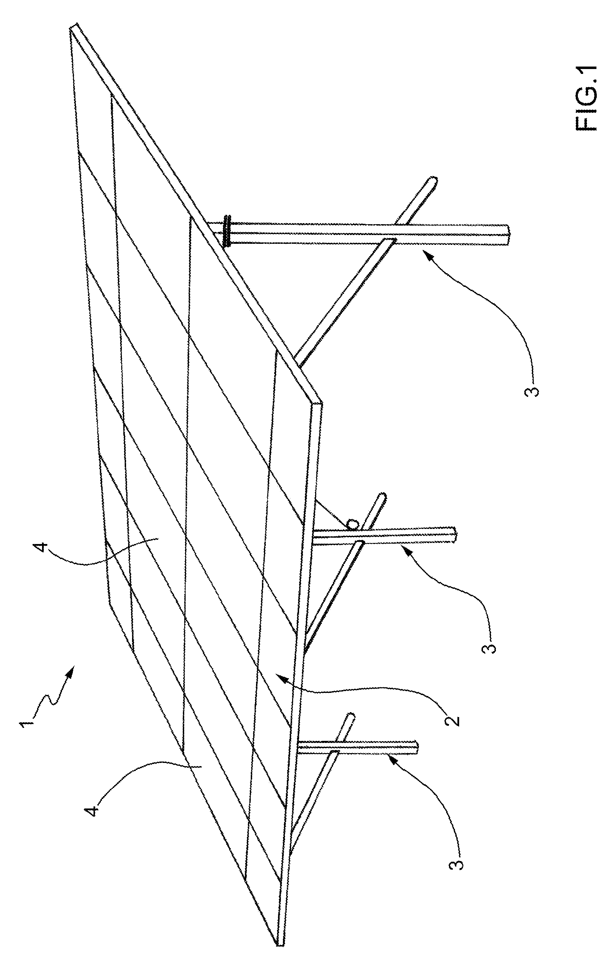

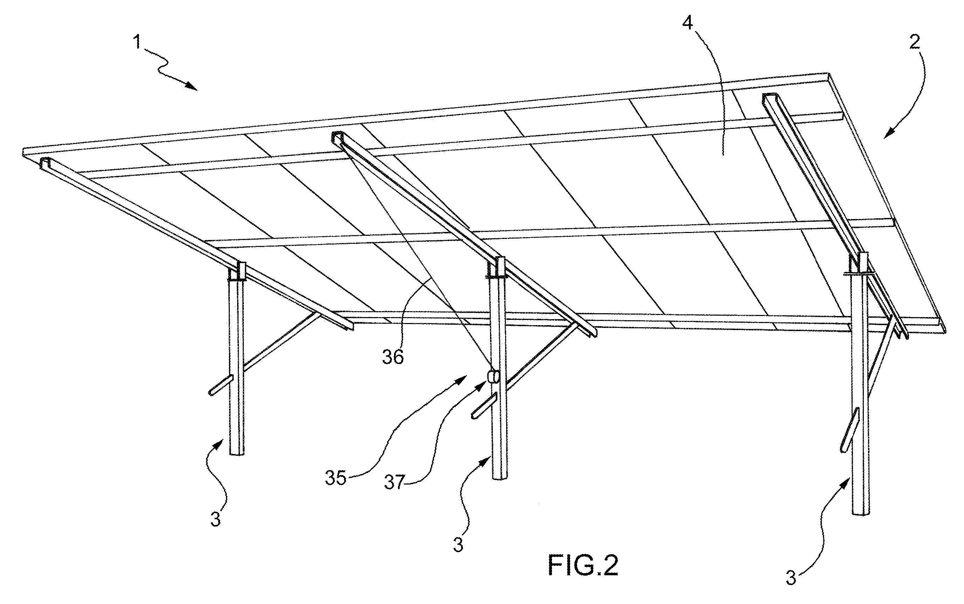

In Figures 1 and 2, the reference number 1 designates as a whole a support for solar panels. The support 1 is designed to support solar panels 2 of any type (thermal, photovoltaic, hybrid solar panels), which will be referred to hereinafter simply as "solar panels 2" for convenience of treatment.

The support 1 for solar panels 2 comprises three supporting elements 3, two of which are set at respective ends and one approximately in the middle of a solar panel 2 which comprises a plurality of solar modules 4. The supporting elements 3 are identical to one another and only one of these supporting elements 3 will be described in what follows.

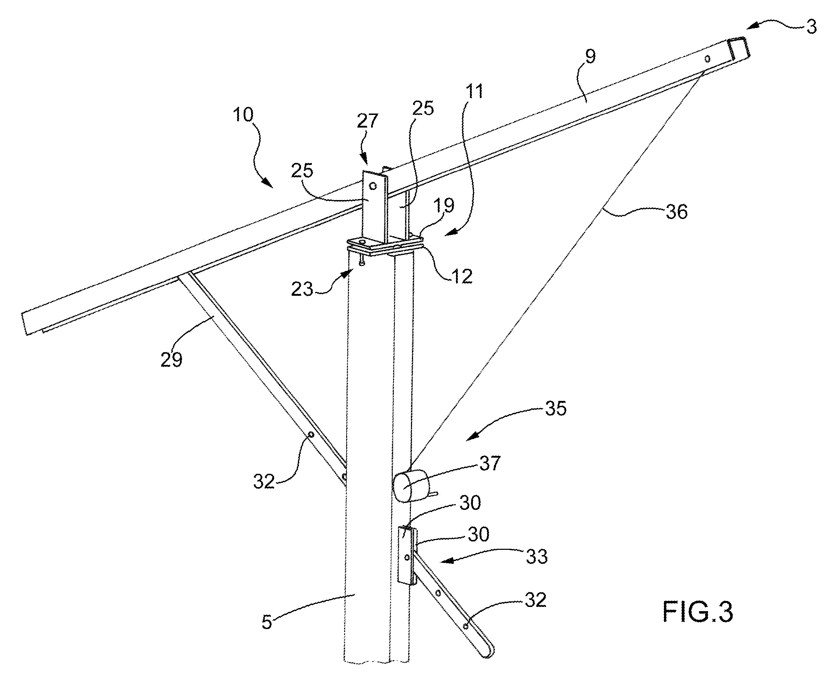

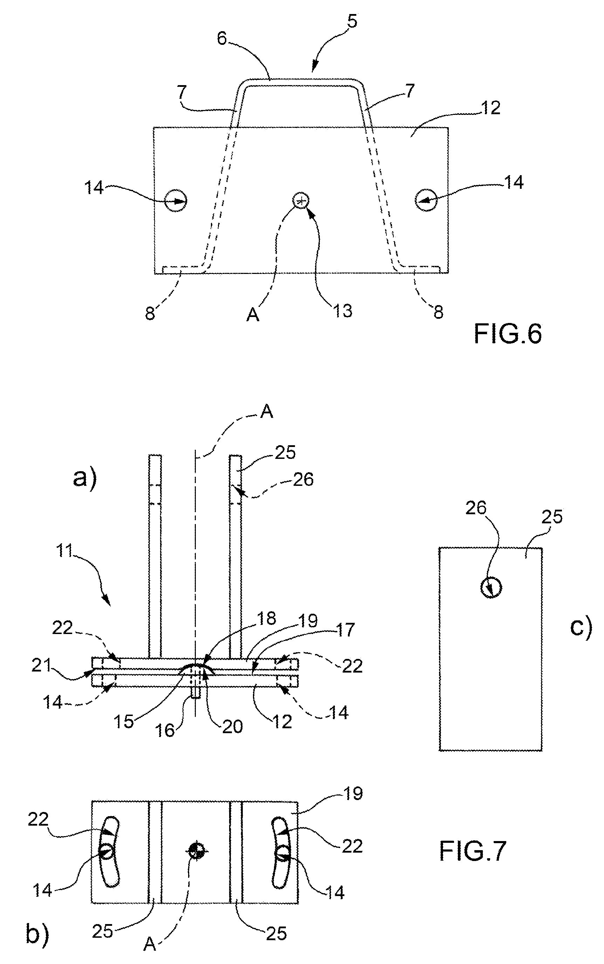

According to what is illustrated in Figure 3, the supporting element 3 comprises an omega pole 5, i.e., a pole 5 partially set in the ground (for approximately half of its length), which is arranged vertically with respect to the plane of site and has in cross section a bridge shape, i.e., a U shape. In particular, as is illustrated more clearly in Figure 6, the omega pole 5 has a rear wall 6, two respective side walls 7 inclined with respect to the rear wall, and two front-wall flanges 8 radiused to a respective side wall 7. The supporting element 3 further comprises a rod 9 for supporting the solar panel 2, which is also bridge-shaped, i.e., U-shaped, in cross section, and a system 10 for regulating the inclination of the solar panel 2.

The regulating system 10 comprises a joint 11 for regulating the inclination of the solar panel 2 set at a top end of the omega pole 5.

The joint 11 comprises a fixing plate 12, which is welded on the head of the omega pole 5, in particular to the two front-wall flanges 8 and to the two side walls 7. The plate 12 further comprises a central through hole 13 having an axis A and two lateral through holes 14 made at respective ends of the fixing plate 12.

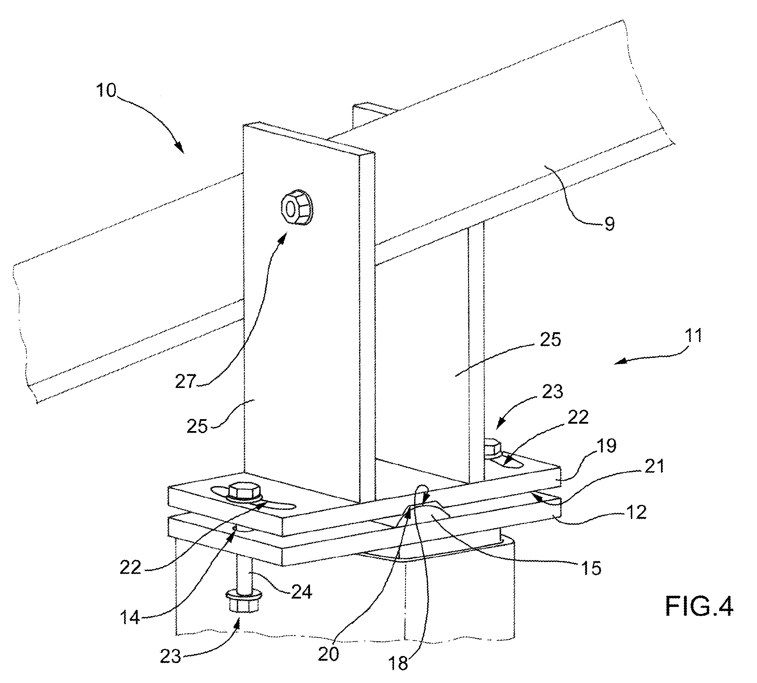

As will be illustrated more clearly in Figure 4, the joint 11 then comprises an adapter 15, which is crescent-shaped and has a length that substantially approximates the width of the fixing plate 12. The adapter 15 is set approximately in the middle of the fixing plate 12 and is connected to the fixing plate 12 by means of a connection element 16 coaxial to the axis A. The adapter 15 has: a bottom surface that is substantially smooth and plane, which, in use, rests on a top surface 17 of the fixing plate 12; and a top surface 18, which is substantially cylindrical and has an axis V perpendicular to the axis A.

The joint 8 then comprises a further plate 19, which has dimensions substantially the same as the dimensions of the fixing plate 12. The plate 19 has a seat 20, which is made on a bottom surface 20 of the plate 19 and has a shape complementary to the cylindrical top surface 18 of the adapter 15.

In use, the adapter 15 is set between the two plates designated by 12 and 19, which consequently are at a slight distance apart from one another in such a way that the plate 19 can move and vary its inclination with respect to the plane defined by the top surface 17 of the fixing plate 12. The plate 19 can tilt and/or rock by approximately 8° with respect to the plane defined by the top surface 17 of the fixing plate 12. According to further variants, it is possible to increase the degree of inclination of the plate 19 intervening on the shape of the adapter 15, which could alternatively have other developments, or else on the height of the adapter 15.

The plate 19 further comprises two through slots 22, which are the same as one another and a provided at respective ends of the plate 19. Each of the two slots 22 faces, in use, a respective lateral through hole 14 of the fixing plate 12, has a profile shaped like the arc of a circumference and is coaxial to the axis A, as illustrated more clearly in Figure 7b.

The joint 11 then comprises fixing means 23 for connecting the two plates 12 and 19. In particular, the fixing means 23 comprise a pair of pins 24, each of which slides within a respective lateral through hole 14 and a respective through slot 22 and is provided with two bushings at its respective ends to prevent them from sliding out.

The plate 19 is free to turn about the axis A so as to vary its inclination. During its movement about the axis A, each through slot 22 slides with respect to the respective fixed pin 24. The extent of the rotation is clearly determined by the extent of the through slots 22 set within which is the respective pin 24.

The supporting element 3 then comprises two plates 25, which are connected to a top surface of the plate 19 and each have a respective through hole 26 made at a top end. The two plates 25 function as support for the rod 9 for supporting the solar panel 2, which is hinged to the two plates 25, approximately in its median point by means of further fixing means 27, which co-operate with the through holes 26.

The omega pole 5 comprises a through slit 28 made in the rear wall 6, at an intermediate height of its emerging portion.

The supporting element 3 then comprises a graduated rod 29 for regulating the inclination of the solar panel 2. Said graduated rod 28 is connected at a free end in a fixed way to a bottom surface of the supporting rod 9 opposite to the surface in contact with the solar panel 2. The graduated rod 29 is then inserted within the through slit 28 of the omega pole 5.

The omega pole 5 has two rear fixing plates 30, which are welded to the rear wall 6 at opposite sides of the through slit 28 provided in the rear wall 6 itself. Each of the two rear plates 30 has a through hole 31, said through holes 31 facing one another. Also the graduated rod 29 comprises a plurality of through holes 32 set at the same distance apart from one another.

Connection of the graduated rod 29 to the omega pole 5 is provided by further fixing means 33. In particular, the fixing means 33 comprise a pin 34 inserted within the through holes 31 of the two rear plates 30 and within any through hole 32 made on the graduated rod 29, a rear portion of which exiting from the through slit 28 is set between the two rear plates 30. The fixing means 33 further comprise a cotter pin, which is designed to prevent the pin 34 from sliding out from said through holes.

According to a preferred embodiment, the supporting element 3 then comprises a device 35 for aid to pulling comprising a steel cable 36, which is connected to a top free end of the supporting rod 9 for assisting the operator when he has to vary the inclination of the solar panel 2 and hence of the supporting element 3. The steel cable 36 is wound by means of a winch 37 comprising a drum with horizontal axis, the movement of which can be selectively manual (if provided by means of a crank on which the operator acts) or else controlled by actuation means (such as, for example, an electric or hydraulic motor, etc.).

Preferably, only the central supporting element 3 of the support 1 for solar panels 2 is provided with the device 35 for aid to pulling, whereas the supporting elements 3 arranged at respective ends of the solar panel 2 are without them.

According to a variant (not illustrated), the fixing plate 12 comprises a central through slit, instead of the central through hole 13. In this way, the adapter 15 and the corresponding fixing element 26 can translate with respect to the fixing plate 12. The stroke of the adapter 15 is determined by the extent of the through slit.

According to further variants (not illustrated) the omega pole 5 can have selectively further shapes of its cross section, such as for example an H shape, or else a tubular shape.

According to a further variant (not illustrated), the system 10 for regulating the inclination of the solar panel 2 comprises a rack system or any other type of mobile mechanical connection. In the case of a regulation obtained by means of a rack system, the supporting element 3 does not comprise the device 35 for aid to pulling.

According to further variants (not illustrated), the supporting element 3 is not provided with the graduated rod 29 and comprises a graduated element having further geometrical developments, such as, for example, a substantially semicircular shape.

In use, the operator has to bring the solar panel 2 to the desired inclination using the indications provided on the graduated rod 29. Once the desired inclination has been reached, he has to couple the graduated rod 29 to the omega pole 5 inserting the pin 34, and then block the coupling by means of the cotter pin.

Finally, the three supporting elements 3 are tensioned by acting on the device 35 for aid to pulling, i.e., on the winch 37.

According to a further variant (not illustrated), the solar panel 2 can be provided with a plurality of sensors, which send a signal to a control unit. The control unit processes the data sent by the sensors by means of a purposely provided astronomic algorithm to supply an estimate of the best possible inclination for the solar panel 2.

The support 1 described so far presents the advantages of enabling variation of the inclination of the solar panel 2 so as to track the best position with respect to the Sun, and moreover the support 1 can be conveniently moved by just one operator, who can perform all the operations in sequence on his own.

## Claims

1. A support (1) for solar panels (2), comprising at least one supporting element (3), which in turn comprises:
a pole (5) arranged vertically and partially set in the ground;
a rod (9) for supporting the solar panel (2), said rod (9) being inclined with respect to the pole (5) and being hinged to the pole (5); and
a system (10) for regulating the inclination of the solar panel (2); the regulating system (10) comprises a connection arm (29), which is connected at a first end by means of a fixed mechanical connection to a bottom portion of the supporting rod (9) and at a second end to the pole (5); the regulating system (10) further comprises a joint assembly (11), which has a first vertical axis (A) and is set between the supporting rod (9) and the pole (5) in order to enable coupling of the supporting rod (9) to the pole (5);
the support (1) is **characterized in that** the connection arm (29) is connected by means of a mobile mechanical connection to the pole (5) in order to enable a variation of the inclination of the rod (9) for supporting the solar panel (2) with respect to the pole (5) itself, and **in that** the joint assembly (11) is connected to the supporting rod (9) and is able to turn about the first axis (A) to set the supporting rod (9) in rotation about the first axis (A).

2. The support for solar panels according to Claim 1, wherein the joint assembly (11) is fixedly connected to a top end of the pole (5); the joint assembly (11) being connected to the supporting rod (9) so as to vary the inclination of the rod (9) for supporting the solar panel (2) with respect to the pole (5).

3. The support for solar panels according to Claim 2, wherein the joint assembly (11) comprises: a first fixing plate (12), which is fixedly connected to the top end of the pole (5); a second plate (19); and an adapter (15) set between the first fixing plate (12) and the second plate (19).

4. The support for solar panels according to Claim 3, wherein the second plate (19) can tilt by approximately ±8° with respect to the plane defined by a top surface (17) of the fixing plate (12).

5. The support for solar panels according to Claim 4, wherein the adapter (15) has a top surface (18) that is substantially cylindrical; the second plate (19) has a seat (20), which is made in a bottom surface (21) for receiving the adapter (15) and has a shape substantially complementary to the top cylindrical surface (18) of the adapter (15).

6. The support for solar panels according to Claim 3, Claim 4, or Claim 5, wherein the first fixing plate (12) has a first central through hole (12) coaxial to the first axis (A); the joint assembly (11) comprises means (16) for connection of the adapter (15) to the first fixing plate (12), which also are coaxial to the first axis (A).

7. The support for solar panels according to any one of the preceding claims, wherein the pole (5) comprises a through slit (28) made at a given height of its emerging portion; the connection arm (29) is inserted within the through slit (28) of the pole (5) so as to be connected in different points to said pole (5).

8. The support for solar panels according to Claim 7, wherein the connection arm (29) comprises a plurality of first through holes (32) set at the same distance apart from one another, which are designed to enable connection of the connection arm (29) to the pole (5) by first fixing means (33).

9. The support for solar panels according to Claim 8, wherein the pole (5) has at least one second through hole (31); the first fixing means (33) are designed to enable connection of a first through hole (32) to said at least one second through hole (31).

10. The support for solar panels according to Claim 9, wherein the pole (5) has two second through holes (31), facing one another; the first fixing means (33) are designed to enable connection of the second through holes (31) to a first through hole (32).

11. The support for solar panels according to Claim 10, wherein the pole (5) has two rear fixing plates (30), which are connected at opposite sides of the through slit (28); a rear portion of the connection arm (29) exiting from the through slit (28) is set between the two rear fixing plates (30).

12. The support for solar panels according to any one of Claims 7 to 11, wherein the pole (5) has a substantially U-shaped cross section and comprises a rear wall (6); the through slit (28) being made in the rear wall (6).

13. The support for solar panels according to any one of the preceding claims, wherein the mobile mechanical connection of the connection arm (29) to the pole (5) is provided by means of a rack system.

14. The support for solar panels according to any one of the preceding claims and comprising a cable (36), which is connected to a top end of the supporting rod (9); the cable (36) is wound by means of a winch (37).
